# EUROPEAN PATENT APPLICATION

(11) **EP 2 722 775 A1**
(43) Date of publication of application: **23.04.2014**
(21) Application number: 12306273.9
(22) Date of filing: 16.10.2012
(51) Int. Cl.: G06F 17/30

(54) **Socially-enhanced information search system**

(71) Applicant: Alcatel Lucent, 75007 Paris (FR)
(72) Inventor: Ansiaux, Arnaud, 91620 NOZAY (FR); Hacid, Hakim, 91620 NOZAY (FR)
(74) Representative: Loyer & Abello

(57) **Abstract**

A computer implemented method for processing queries in a data communication network comprising information resources and a search engine, the method comprising:
- receiving a further sequence of queries from a user (300) for searching information,
- detecting a similarity between the received sequence of queries and a predetermined virtual community, the virtual community comprising a plurality of similar sequences of queries originating from a plurality of users (100,200) and corresponding to a predetermined virtual community repository the virtual community repository comprising shared query contents selected among the query contents of queries making up the similar sequence of queries, wherein the queries comprise search queries comprising a query content intended for a search engine, and/or navigation queries comprising a query content pointing to an information resource,
- in response to detecting the similarity, notifying a user selected among the users from which of the similar sequences of queries have originated.

## Description

### Field of the present invention

The present invention relates to information search systems for data communication networks.

### Background

The content of information networks such as the World Wide Web is organized with lot of pages, or resources, containing links towards other pages. A resource is defmed as something available at an address on the network. The address, named also URL (*Unified Resource Locator*), defines the resource in an unambiguous way. The basic resource is commonly a document described with the HTML language (*HyperText Markup Language*), but a resource may comprise lot of alternative forms, with for example enhanced structure, or multimedia information like pictures, audio or video streams.

The unprecedented volume of information on the World-Wide Web gives rise to practical difficulties for the end users to assess the quality of information. These Information quality problems are not uncommon on the World Wide Web, but they are not totally solved yet.

The Web is certainly the hugest information repository. The main ingredients which have helped the Web for being so important is the ability of publishing worldwide accessible content and the ability of communicating with peers. In its early days, the Web was more a static repository where particular users (or providers) publish content and the major part of the users read the published content. With the emergence of Web 2.0, the initial model has been changed making the user a potential contributor to the content of the Web by offering different tools like blogs, social networks, etc.

Web-based information systems, such as search engines, news portals, and community sites, provide access to information originating from numerous information providers. The quality of provided information varies as information providers have different levels of knowledge and different intentions. Users of web-based systems are therefore confronted with the increasingly difficult task of selecting high quality information from the vast amount of web-accessible information. How can information systems support users to distinguish high-quality from low-quality information? Which filtering mechanisms can be used to suppress low-quality information? How can filter decisions be explained to the user?

A lot of researches have already been conducted in the Information Quality domain for years in many areas. In these last years, several new approaches have been developed to resolve the problem of Information Quality. Most of them are based on the analysis of social data offered by the WEB2.0, through social-network like Slashdot, blog, chat and community creation used in real-time. In fact, real time is an important factor to keep in mind when you search quality in information you need. Moreover many studies have shown that the quality of information depends in general strongly on the context in which they are going to be used.

### Summary

The present invention deals with the problem of information quality and proposes to leverage collaborative search through two dimensions: automatic (through machine analysis of search behavior) and user-assisted (through the correlation of users and the possibility for them to contact experienced people in the same "information need").

In an embodiment, the present invention provides a computer implemented method for processing queries in a data communication network comprising a collection of information resources linked by a collection of links , the method comprising:
- receiving a sequence of queries from a user for searching information,
- detecting a similarity between the received sequence of queries and a predetermined virtual community, the virtual community comprising a plurality of similar sequences of queries originating from a plurality of users and corresponding to a predetermined virtual community repository, the virtual community repository comprising shared query contents selected among the query contents of queries making up the similar sequences of queries, wherein the queries comprise search queries comprising a query content intended for a search engine, having an index of the information resources and operable to retrieve information resources from the index as a function of the search query and/or navigation queries comprising a query content pointing to an information resource,
- in response to detecting the similarity, notifying a user selected among the users from which of the similar sequences of queries have originated.

In an embodiment, the present invention provides a method for generating a socially-enhanced information search system in a data communication network comprising a collection of information resources linked by a collection of links and a search engine having an index of the information resources and operable to retrieve information resources from the index as a function of a search query, the method comprising:
- receiving a plurality of sequences of queries from a plurality of users, wherein the queries comprise search queries comprising a query content intended for the search engine and/or navigation queries comprising a query content pointing to an information resource,
- determining correlations between the sequences of queries to identify a subset of the sequences of queries having a similarity as a virtual community,
- generating a virtual community repository for the virtual community comprising shared query contents selected among the query contents of queries making up the similar sequences of queries
- receiving a further sequence of queries from a user
- detecting a similarity between the received sequence of queries and the similar sequences of queries corresponding to the virtual community repository,
- in response to detecting the similarity, notifying a user selected among the users from which of the similar sequences of queries have originated.

According to embodiments, such methods can comprise one or more of the features below.

In embodiments of the method, a similar sequences of queries is ordered in a tree, wherein determining correlations comprises comparing the trees corresponding to the sequences of queries wherein the comparing comprises breaking down each tree into substructures and detecting frequent substructures among the trees of the virtual community, the method further comprising selecting a query content associated to detected frequent substructure as a shared query content of the virtual community repository.

In embodiments of the method, detecting a similarity comprises breaking down into substructures a further tree corresponding to the further sequence of queries and comprises comparing the substructures of the further tree to the frequent substructures among the trees of the virtual community.

In embodiments of the method, the notifying step comprises sending a shared query content of the virtual community repository to the user who sent the further sequence of queries.

In embodiments of the method, the virtual community repository further comprises a list of members, the list of members comprising identity information and contact information of the users from which the similar sequences of queries have originated.

In embodiments of the method, the notifying step comprises sending contact information of a user among the list of members to the user who sent the further sequence of queries.

In embodiments of the method, the user can set a flag to allow or inhibit sending the identity or contact information of the user to a user found in the list of members contact information.

In embodiments of the method, the notifying step comprises sending to a users found in the list of members contact information and/or identity information of the user who sent the further sequence of queries.

In embodiments of the method, the content of search query comprises key words.

In embodiments of the method, the content of navigation query comprises an URL.

In embodiments of the method, the shared query contents of search queries comprise shared key words.

In embodiments of the method, the shared query contents of navigation queries comprise an URL.

In an embodiment, the present invention provides a computer-implemented socially-enhanced information search system, for a data communication network comprising a collection of information resources linked by a collection of links and a search engine having an index of the information resources and operable to retrieve information resources from the index as a function of a search query, the information search system comprising:
- an interface for receiving a sequence of queries from a user for searching information,
- a similarity detection module for detecting a similarity between the received sequence of queries and a virtual community, the virtual community comprising a plurality of similar sequences of queries originating from a plurality of users and corresponding to a predetermined virtual community repository, the virtual community repository comprising shared query contents selected among the query contents of queries making up the similar sequence of queries, wherein the queries comprise search queries comprising a query content intended for the search engine and/or navigation queries comprising a query content pointing to an information resource,
- a notification module for notifying a user selected among the users from which of the similar sequences of queries have originated, in response to detecting the similarity.

In an embodiment, the present invention provides also a computer-implemented socially-enhanced information search system, for a data communication network comprising a collection of information resources linked by a collection of links and a search engine having an index of the information resources and operable to retrieve information resources from the index as a function of a search query, the information search system comprising:
- an interface for receiving a plurality of sequences of queries from a plurality of users, wherein the queries comprise search queries comprising a query content intended for the search engine and/or navigation queries comprising a query content pointing to an information resource,
- a correlation module for determining correlations between the sequences of queries to identify a subset of the sequences of queries having a similarity as a virtual community,
- a virtual community repository for the virtual community comprising shared query contents selected among the query contents of queries making up the similar sequences of queries,
- a similarity detection module for detecting a similarity between a further sequence of queries and the similar sequences of queries corresponding to the virtual community repository,
- a notification module for notifying a user selected among the users from which of the similar sequences of queries have originated, in response to detecting the similarity have originated.

In embodiments of the device, a similar sequence of queries is ordered in a tree, wherein the correlation module is capable of comparing the trees corresponding to the sequences of queries, wherein the comparing comprises breaking down each tree into substructures and detecting frequent substructures among the trees, the device further comprising a selection module capable of selecting the sequences of queries satisfying a similarity criteria as the virtual community and selecting a query content associated to detected frequent substructure as a shared query content of the virtual community repository.

In embodiments of the device, the virtual community repository further comprises a list of members, the list of members comprising identity information and contact information of the users from which the similar sequences of queries have originated.

In embodiments of the device, the notification module sends contact information of a user among the list of members to the user who sent the further sequence of queries.

### Brief description of the drawings

These and other aspects of the present invention will be apparent from and elucidated with reference to the embodiments described hereinafter, by way of example, with reference to the drawings.
- **Figure 1** is an illustration of a search graph generated by a user.
- **Figure 2** is a functional illustration of a method of processing two search graphs to create a virtual community group.
- **Figure 3** is a functional illustration of a search session assisted with the results of a virtual community group.
- **Figure 4** is an illustration of a system architecture in which a user makes a sequence of search queries.
- **Figure 5** is an illustration of method for facilitating communication within a virtual community group.

### Detailed description of the embodiments

As said above, the web is a mine of information. The main difficulty for each user is to access to the right information with a sufficient quality. Then the user applies an iterative process to finally reach the whished information. It is called a search session in the present invention. A search session is intended to contain several successions of search operations either through a search engine with keyword typing or through navigation from link to link. These operations are expected to end-up with the satisfaction of the user on both his information needs and quality criteria.

On the figures a request is identified with a couple including a request number R1, R2, Rm and a resource number S1, S2, Sn. Then R2-S2 is the second request in the search sequence and it points to the web page S2.

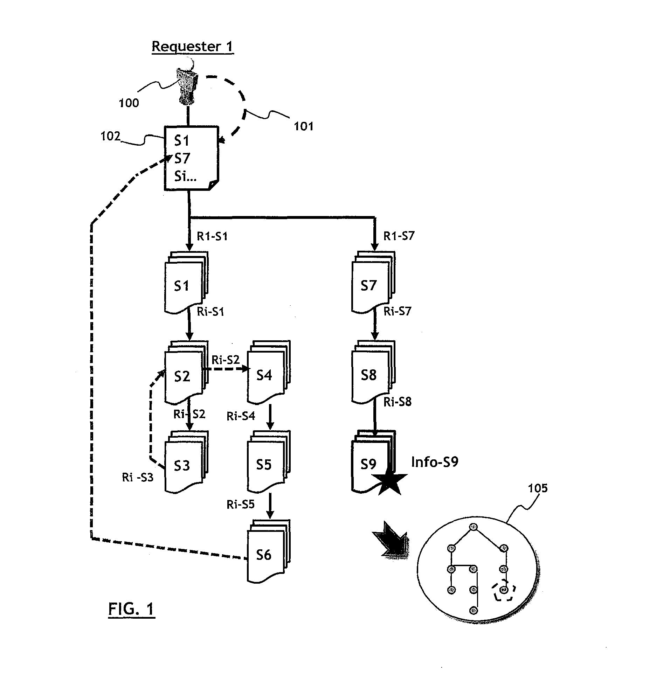

The conventional user behaviour during a search session is illustrated with the **Figure 1**. In a first step the user 100 sends a first request 101 to a search engine. The request sent to a search engine is named a search query. In the answer list 102 provided by the search engine, the user 100 selects an item. For example, the item is an hyperlink pointing to a web resource. Of course, the rank of the item in the answer list 102 increases the probability of the user's selection. In this use case, the user 100 selects to load the web resource S1 by sending the request R1-S1 first. The request T1-S1 is a navigation query posted by the client browser e.g. an HTTP request. Then he requests and loads successively the web resources S2, and S3. The information provided in the web resource S3 is not efficient, then he tries another way with the web resources S4, S5 and S6 then he go back to the first page 102 and select the new web resource S7, following by S8. Finally the user is satisfied of pertinent information found on the web resource S9. That means that this information matches with his quality criteria.

The successive user actions can be represented as graph. Such a graph may be oriented, weighted, labeled, and so on. This graph is the signature of the user 100 search session, named requests session tree 105. Once the search session has come to an end, i.e. no further query is sent by the user, the end point is considered to be a target, i.e. a resource that may actually correspond to what was sought. This graph includes the search query 101 and navigation queries R1-S1 to R1-S8.

In an embodiment, the search query is made from a search engine page. This search query is based on the key words typed by the user in an input field of this search engine page. This search query is created by the browser with the input field data after the selection by the user of the search button on the page.

A navigation query is different. It is the result of the selection by the user of an item with a hyperlink, in any resources. A navigation query is a query made to load the web resource pointed to this hyperlink. A navigation query includes an URL on the web resource. A navigation query is sent by the browser to the server which stores the web resource.

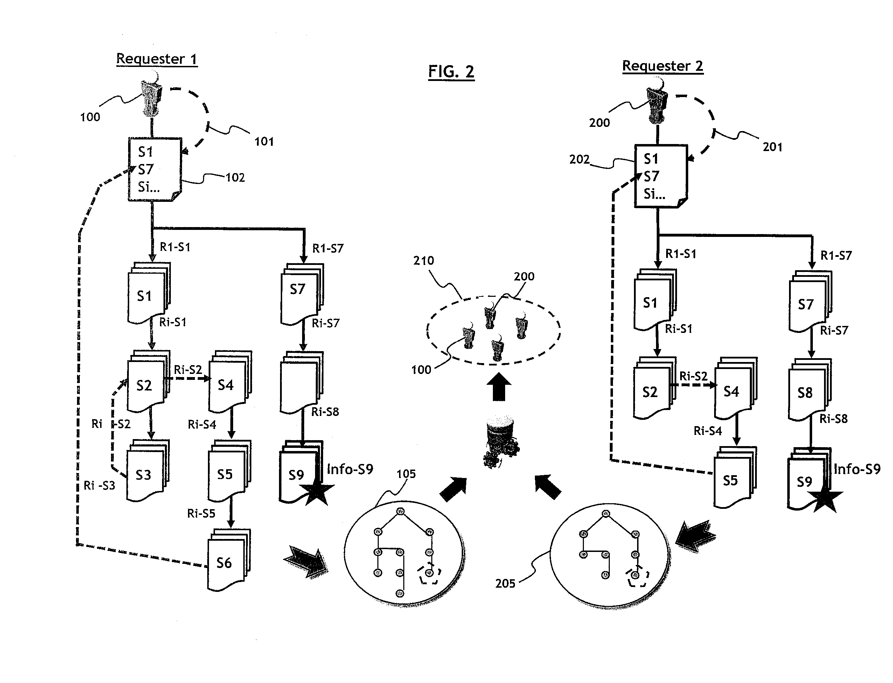

With reference to **Figure 2**, a requester 200 posts the query 201. This query 201 is similar to request 101. In this use case, a similar behavior is also observed with user 200, although it is not the same search graph. The decision of making a page relevant to the user can be done in different manner by, for example checking if the user fires similar queries after checking the web page, by asking for explicit feedback, or other. That is, the users labeled as Requester 1 and 2 are supposed to have an experience with the page S9. They can serve as a reference in the future for people who search similar information. Despite the differences between the two requests session trees 105 and 205, it's possible to capitalize this experience to create a specific group of persons which is dynamically constructed as a function of the executed requests made during the search session such a groups is named a social network 210. This social network 210 is built as a class of equivalence of request session trees. Users become a member of the specific group because they have made a sequence of requests sufficiently to close those performed by the members of the group.

As a preliminary step, the social network can be generated only with the participation of users who have accepted to become potential informant people and share their knowledge and their experience about the information found on the web.

To leverage the structures, the equivalences between search sessions or components of search sessions are analyzed. This analysis is expected to provide:
(i) Good quality results in the form of both documents and users who had experience with a given document and
(ii) Faster objective achievement since the user does not spend a lot of time in useless web resources. This second benefit is achieved through the prediction of the possible target for a given user operating a given sequence in his/her search session.

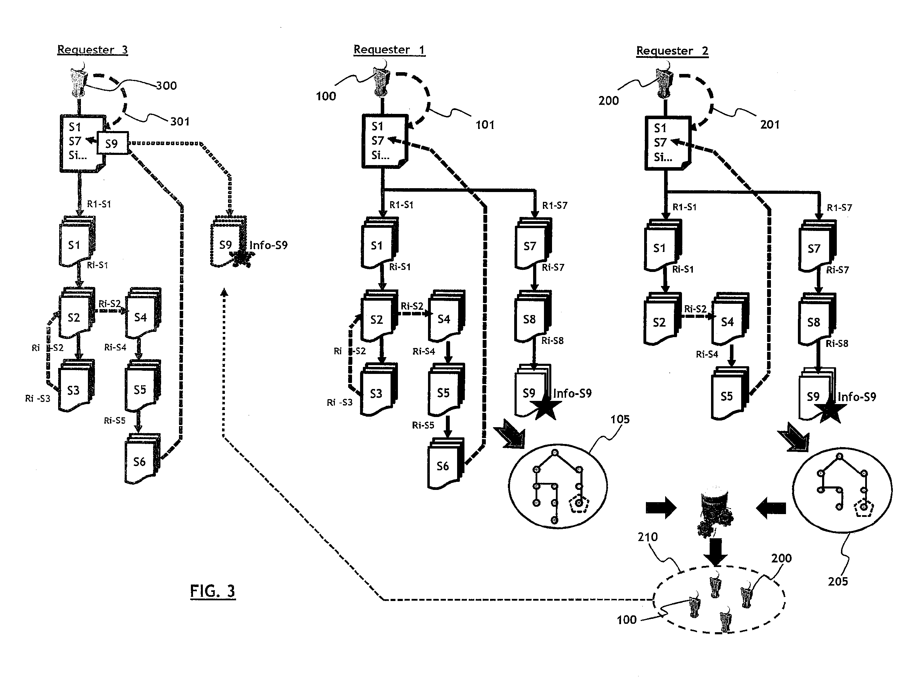

Then another user can benefit from the accumulated experience. With reference to **Figure 3****,** a user 300 sends a request 301 similar to the requests of users registered in the social network 210. When the search system observes similar behaviour with what has been already observed, it suggests the target resource S9. This suggestion can be notified to the user 300 in different manners. It could be a popup displayed on the searching windows. It could be an insertion in the top ranking resources within the result page recovered from a search engine. Then, the user can choose with confidence in the top of the result list to get the web resource S9 recommended by the social network 210.

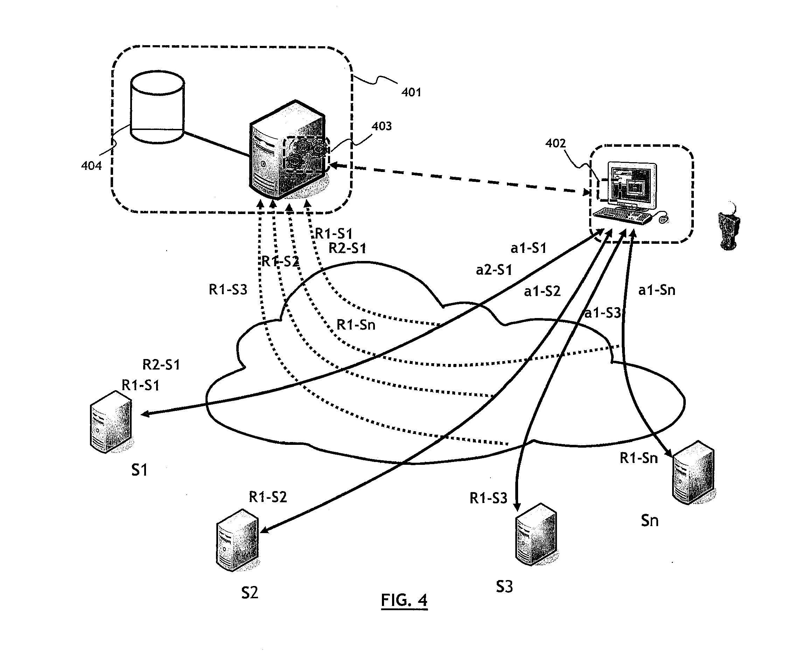

We will now describe how this system operates, with reference to **Figure 4**. The system is composed of two main software modules 402, 403 which are respectively installed in the client part 400 and the server part 401 of conventional client server architecture.

The client module 402 provides several functionalities such as:
- Secure connection with the server module 403;
- Registration to the social network service;
- Forwarding of the requests sequence to the server module.

The server module 403 provides several functionalities such as:
- Secure connection with the client module 402;
- Registration into a data base of all the users who have registered to the social network service and then accepted to become a part of the social network ;
- Analysis of the graphs of request sequences to find similar graphs and the corresponding people who have made these requests sequence;

The client module 402 is connected via a secure connection 405 to the server module 403 and the user is registered on the social search server 401 by this server module 403. The techniques of secure connections are well known. For example TSL (*Transport Layer* Security) provide a secure layer to communicate on a network. During the navigation, the client module 402 duplicates all the requests Ri-Sj sent by the user 400 to the web and sends them to the server module 403. Then the server is dynamically able to create the tree of the navigation steps made by the user. The client module 402 is also able to provide some additional information like the time spent reading a page. This is made with a time stamping of the requests sent to the server module 403 for example.

On figure 4, the user 400 posts a first request R1-S1 and receives the resource a1-S1. On this first answer, the user selects a new link and posts a second request R2-S1. The answer of the server S1 is referenced a2-S1. The user is not interested by the page a2-S1, and then he goes back to a1-S1 and sends the request R1-S2 to receive a reply with the resource a1-S2. At each step of the navigation, the client module 402 sends to the server module 403 a copy of the requests, successively R1-S1, R2-S1, R1-S1, and R1-S2 in this example. The server module 403 creates the navigation tree and then analyzes this tree to determine correlations with, i.e. search similarity with a virtual community previously registered in a data storage means 404, like a data base.

The search for similar search session trees is done by using algorithms of path graphs used in graph theory associated with the static definition of equivalence rules. The main idea applied to find the similarity between two graphs is to break down each graph into substructures and to evaluate the frequency of these substructures. A number of suitable comparison algorithms are known in the art to determine correlations between session tree graphs. There are some differences between the different algorithms. The two main differences are about the quality of the results and the computer resources required to run these algorithms. For example, TreeMiner and Freqt are two algorithms with a high level of quality. But they consume lot of resources. If the tree size is N, a quantity 3N of resources is required to process the graph. Chopper and "Ad Free trees indexing" are two other algorithms with a lower quality than the previous algorithms. But, with the same graph size, only a quantity 2N of resources is required. Furthermore the analysis of the path graphs could combine "TOP-DOWN" algorithms and/or "BOTTOM-UP" algorithms. Machine learning techniques associated with decision trees technique or patterns search, for example clustering, can also be used in some cases to allow fairer refinement of the equivalence rules. The groups of people created form the social network. The overall results of the search for equivalent or "pseudo-equivalent" trees could be weighted using scoring or ranking techniques given by the members of the social network. In some cases, other techniques called predictive techniques can be applied in addition to enable faster search.

Then, there is the possibility to choose between different strategies and adapt the search system with the selection of at least one algorithm according to the system requirements.

The similarity search results are classified in different categories and define a correlation level between trees. For example zero branch of difference corresponds to total equivalence and highest confidence level of similarity. One to three branches of difference corresponds to a high level of equivalence and confidence. It is possible to tune the threshold of the categories to optimize the system result. Finally, if a search tree is really different from the different graphs that characterize the different virtual communities stored in the data base, a new search graph is created for the requester, who may then be at the origin of a new community.

To improve the system achievement, the server module 403 is enriched with a dual dynamic approach combining in the same time techniques of search engines and usages of social networks. The result of a "search session" is no longer solely the result of a classical search algorithms integrated into a search engine. In other words, collective intelligence and previous experiences are combined to build filtering strategies according to quality criteria.

Operation of the community can be made in different ways. First by providing advice to the user as previously described at the figure 3, with a popup window focusing on a target resource. The second way is to allow users to share their point of view on the topic of the shared sequence of queries by contact information.

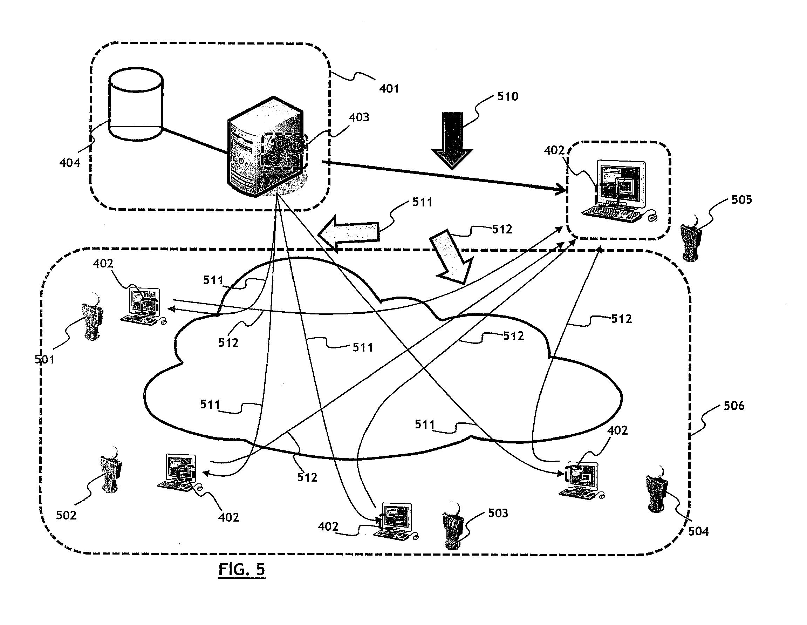

The main idea of this second aspect of the invention is to connect the member of the same virtual network. With reference to **Figure 5****,** on the web, a server 401 includes the server module 403, a plurality of users 501, 502, 503, 504. Each of the users' computers includes the client module 402. Then all of them are connected with a secure link to the server module 403. These users 501, 502, 503, 504 are registered in a virtual community 506 because the tree comparison algorithm determined that they share the same query contents.

The new user 505 sends queries similar to the queries of these customers 501, 502, 503, 504. Therefore, user 505 shares also the same query contents with the virtual community 506. Then this user 505 has the possibility to be registered to the virtual community 506 and the possibility to benefit from the community experience. According to the choices of the user, the search session results may be enriched with a possibility to contact the other members of the virtual community 506. In that case the server module 403 notifies at least one or all the contact information of the virtual community 506 members to the user 505. The server module 403 returns directly to the requester the list of members who have made more or less the same requests sequence. For example an email address is sent by the server module 403 to the user 505. The user 505 may also subscribe to the virtual community 506 address book. In that case, the users 501, 502, 503, 504 are notified of the admission of a new member in the community, as shown by reference 511. For example, the server module 403 sends to the members of the list the contact information of the end-user. Finally, the server module 403 connects to the users who had past experience to search the same target resource. Then the old members are able to contact as shown by reference 512, the new user 505. These people can exchange information on the research subject. If the new user 505 prefers to preserve his privacy and be anonymous in the community he can choose during the subscription process to select an option that forbids the sharing of his contact information. The system keeps the confidentiality of the users with the optional subscriptions of these features made by the users.

The global behavior of the system starts with a first step wherein a search session is opened by the users who exploit the service. Thus, it is responsible for signing-up the user to the social search service. It is also mainly an administration step which consists of providing unique identity information, for example an identifier with a usemame and a password, an email address, and other profile information if needed, such as for example interests, public information, and other. This is made with the connection of the client module 402 to the server module 403 with the secure connection 405.

Then the user starts a session of advanced search using the social control techniques previously described. The session enables the system to characterize the user in terms of search session trees and to be able to offer him/her services when a corresponding virtual community is found.

The search system is responsible for the interactive visualization of search results in a conventional manner. The server module 403 also performs an incremental registration of the several queries performed and a construction of the search sequence as a graph search. In fact, at this stage, each search process or task participates either in the creation of a new "search graph" or the update of an existing graph. A search graph is a graph capturing and storing all users' navigations while performing search actions in the search system. By search actions we mean, for example search query typing for a search engine, navigation in the results, etc. The queries and the results are analyzed with natural language processing techniques to compute a similarity between search intents in order to decide whether a new search graph has to be created or an update has to be operated. Finally, the construction of search graph is always linked to a session managed by the end-user itself. The graph is finalized when the user stop the search session.

While the graph is built, in live or pseudo real time, or after the end of the search session, the server module 403 performs the graph analysis of the sequence of queries and searches for a group of people who made request sequences almost identical. The objective behind this is to find similarities between search behaviors of people with similar queries and provide some support for them. Thus, the server module 403 analyzes at this stage both the search behavior and the queries and the server module 403 builds recommendations for users who may go directly to the end of the search action, for example the target identified by an earlier session of another user, instead of wasting time navigating and searching. On the other hand, users who have made the same search actions can be recommended as contact for the user to get a feedback about the suggested resources.

Then the client module 402 displays the list of persons belonging to the virtual community who have already made a sufficiently similar sequence of requests, provided by the server module 403. The server module 403 may also send an email to these members in order for them to get in touch with the end-user who is looking presumably for almost the same information.

Elements such as the server module 403 and the client module 402 could be for example hardware means like for example an ASIC, or a combination of hardware and software means, for example an ASIC and an FPGA, or at least one microprocessor and at least one memory with software modules located therein.

The present invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A computer implemented method for processing queries in a data communication network comprising a collection of information resources linked by a collection of links, the method comprising:
- receiving a sequence of queries from a user (300, 505) for searching information,
- detecting a similarity between the received sequence of queries and a predetermined virtual community, the virtual community comprising a plurality of similar sequences of queries originating from a plurality of users (100,200) and corresponding to a predetermined virtual community repository, the virtual community repository comprising shared query contents selected among the query contents of queries making up the similar sequences of queries, wherein the queries comprise search queries comprising a query content intended for a search engine, having an index of the information resources and operable to retrieve information resources from the index as a function of the search query and/or navigation queries comprising a query content pointing to an information resource,
- in response to detecting the similarity, notifying a user selected among the users from which of the similar sequences of queries have originated.

2. The method according to claim 1, further comprising:
- receiving a plurality of sequences of queries (R1-S1, R1-S2) from the plurality of users (100, 200), wherein the queries comprise search queries comprising a query content intended for the search engine and/or navigation queries comprising a query content pointing to an information resource,
- determining correlations between the sequences of queries (105, 205) to identify a subset of the sequences of queries having a similarity as the virtual community,
- generating the predetermined virtual community repository for the virtual community (210, 506) comprising shared query contents selected among the query contents of queries making up the similar sequences of queries,

3. The method according to claim 2, wherein a similar sequence of queries is ordered in a tree (105, 205), wherein determining correlations comprises comparing the trees corresponding to the sequences of queries, wherein the comparing comprises breaking down each tree into substructures and detecting frequent substructures among the trees, the method further comprising selecting the sequences of queries satisfying a similarity criteria as the virtual community and selecting a query content associated to detected frequent substructure as a shared query content of the virtual community repository.

4. The method in accordance with claim 3, wherein detecting a similarity comprises breaking down into substructures a further tree corresponding to the further sequence of queries and comprises comparing the substructures of the further tree to the frequent substructures among the trees of the virtual community.

5. The method according to anyone of claims 1 to 4, wherein the notifying step comprises sending a shared query content of the virtual community repository to the user who sent the further sequence of queries.

6. The method according to anyone of claims 1 to 5, wherein the virtual community repository further comprises a list of members, the list of members comprising identity information and contact information of the users from which the similar sequences of queries have originated.

7. The method according to claim 6, wherein the notifying step comprises sending contact information (510) of a user among the list of members to the user who sent the further sequence of queries.

8. The method according to claim 6 or 7, wherein the user can set a flag to allow or inhibit sending the identity information or contact information of the user to a user found in the list of members contact information.

9. The method according to claim 6, wherein the notifying step comprises sending (511) to a user found in the list of members contact information and/or identity information of the user who sent the further sequence of queries.

10. The method in accordance with one of claims 1 to 9, wherein the content of a search query comprises key words, wherein the content of a navigation query comprises an URL, wherein the shared query contents of search queries comprise shared key words and wherein the shared query contents of navigation queries comprise an URL.

11. A computer-implemented socially-enhanced information search system, for a data communication network comprising a collection of information resources linked by a collection of links and a search engine having an index of the information resources and operable to retrieve information resources from the index as a function of a search query, the information search system comprising:
- an interface for receiving a sequence of queries from a user for searching information,
- a similarity detection module for detecting a similarity between the received sequence of queries and a virtual community, the virtual community comprising a plurality of similar sequences of queries originating from a plurality of users and corresponding to a predetermined virtual community repository, the virtual community repository comprising shared query contents selected among the query contents of queries making up the similar sequence of queries, wherein the queries comprise search queries comprising a query content intended for the search engine and/or navigation queries comprising a query content pointing to an information resource,
- a notification module for notifying a user selected among the users from which of the similar sequences of queries have originated, in response to detecting the similarity.

12. The system according to claim 11, further comprising an interface for receiving a plurality of sequences of queries (R1-S1, R1-S2) from the plurality of users, wherein the queries comprise search queries comprising a query content intended for the search engine and/or navigation queries comprising a query content pointing to an information resource,
the device further comprising:
- a correlation module for determining correlations between the sequences of queries (105, 205) to identify a subset of the sequences of queries having a similarity as the virtual community.

13. The system according to claim 12, wherein a similar sequence of queries is ordered in a tree (105, 205), wherein the correlation module is capable of comparing the trees corresponding to the sequences of queries, wherein the comparing comprises breaking down each tree into substructures and detecting frequent substructures among the trees, the device further comprising a selection module capable of selecting the sequences of queries satisfying a similarity criteria as the virtual community and selecting a query content associated to detected frequent substructure as a shared query content of the virtual community repository.

14. The system in accordance with one of claims 11 to 13, wherein the virtual community repository further comprises a list of members, the list of members comprising identity information and contact information of the users from which the similar sequences of queries have originated.

15. The system according to claim 14, wherein the notification module sends contact information (510) of a user among the list of members to the user who sent the further sequence of queries.
